# EUROPÄISCHE PATENTSCHRIFT

(11) **EP 2 627 556 B1**
(45) Veröffentlichungstag und Bekanntmachung des Hinweises auf die Patenterteilung: **03.08.2016**
(21) Anmeldenummer: 11767704.7
(22) Anmeldetag: 11.10.2011
(51) Int. Cl.: B63H 5/125

(54) **ANTRIEBSVORRICHTUNG FÜR EIN WASSERFAHRZEUG**
PROPULSION UNIT FOR SEA VESSELS
DISPOSITIF DE PROPULSION POUR NAVIRES

(30) Priorität: 13.10.2010 DE 102010048359
(43) Veröffentlichungstag der Anmeldung: 21.08.2013
(73) Patentinhaber: Schottel GmbH, 56322 Spay/Rhein (DE)
(72) Erfinder: HEER, Manfred, 56814 Landkern (DE)
(74) Vertreter: Wagner, Matthias
(86) Internationale Anmeldenummer: PCT/EP2011/067708
(87) Internationale Veröffentlichungsnummer: WO 2012/049163

(56) Entgegenhaltungen:
- DE-U1-202009 009 031
- US-A- 5 035 662
- US-A- 5 125 858
- US-A1- 2002 197 918

## Beschreibung

Die Erfindung betrifft eine Antriebsvorrichtung für ein Wasserfahrzeug, die in einen mit dem Wasserfahrzeug verdrehfest verbindbaren ersten Teil und einen mittels eines Steuermotors mit nachgeordnetem Zahnradgetriebe demgegenüber azimuthierend verschwenkbaren zweiten Teil unterteilt ist.

Derartige Antriebsvorrichtungen sind beispielsweise als azimuthierende Schiffsantriebe bekannt und werden als Haupt- oder Hilfsantriebe von Booten, Schiffen oder sonstigen Wasserfahrzeugen und schwimmenden Strukturen eingesetzt, bei denen hohe Anforderungen an die Manövrierfähigkeit oder Positionierfähigkeit gegeben sind.

Die bekannteste Bauart solcher azimuthierender Schiffsantriebe ist der Ruderpropeller, wie er beispielsweise aus der DE 870655 B bekannt ist. Mittels des Steuermotors mit nachgeordnetem Zahnradgetriebe wird derjenige Teil der Antriebsvorrichtung, welcher die Propeller trägt, d.h. üblicherweise die Propellergondel um eine vertikale Achse gegenüber dem fest und verdrehfest mit dem Wasserfahrzeug verbundenen ersten Teil verschwenkt, so dass das solchermaßen ausgestattete Wasserfahrzeug mittels des Ruderpropellers nicht nur Vortrieb erhält, sondern steuerbar wird.

Darüber hinaus sind auch so genannte Wasserstrahl- oder Jetantriebe bekannt, wozu beispielsweise auf die EP 0 612 657 A1 verwiesen wird. Bei dieser Bauart einer Antriebsvorrichtung wird ein Pumpenläufer in einem geschlossenen Gehäuse eingebaut, in welches Wasser eingesaugt und vom Pumpenläufer beschleunigt als Strahl aus entsprechenden Austrittsöffnungen eines Leitapparates ausgestoßen wird. Mittels des Steuermotors mit nachgeordnetem Zahnradgetriebe ist bei dieser Bauform der Leitapparat als zweiter Teil der Antriebsvorrichtung azimuthierend um eine vertikale Achse verschwenkbar, während der eigentliche Antriebsmotor mit dem Pumpenläufer als erster Teil der Antriebsvorrichtung verdrehfest mit dem Wasserfahrzeug verbunden ist. Auch in diesem Falle erhält somit das Wasserfahrzeug die gewünschte Steuerbarkeit.

Der Azimuthwinkel kann durch entsprechende Endanschläge beschränkt sein, ist jedoch vorzugsweise unendlich, d.h. um 360° endlos ausgebildet.

Bei den bislang verwendeten Steuermotoren mit nachgeordnetem Zahnradgetriebe zum Verschwenken des zweiten Teils der Antriebsvorrichtung, wie sie z.B. aus der US 5 125 858 A bekannt sind, wird üblicherweise ein öl- oder fettgeschmiertes Zahnradgetriebe verwendet, welches häufig gewissen Ölwechselintervallen unterliegt und damit wartungsintensiv ist und überdies gegenüber Kontakt mit dem umgebenden Wasser sorgfältig abgedichtet werden muss, um eine Verschmutzung des umgebenden Wassers mit Öl oder Fett zu verhindern. Dies verursacht unerwünscht hohen baulichen Aufwand.

Aufgabe der Erfindung ist daher die Weiterbildung einer Antriebsvorrichtung für ein Wasserfahrzeug der eingangs genannten Art, die die Nachteile des Standes der Technik vermeidet.

Zur Lösung der gestellten Aufgabe schlägt die Erfindung eine Ausgestaltung gemäß den Merkmalen des Patentanspruchs 1 vor.

Vorteilhafte Ausgestaltungen und Weiterbildungen der Erfindung sind Gegenstand der abhängigen Ansprüche.

Der erfindungsgemäße Vorschlag beruht darauf, dass zur Schmierung des Zahnradgetriebes Wasser verwendet wird. Der Erfindung liegt die Erkenntnis zugrunde, dass das dem Steuermotor nachgeordnete Zahnradgetriebe, d.h. der Azimuthantrieb der erfindungsgemäßen Antriebsvorrichtung, nicht permanent in Betrieb ist und überdies die erforderliche Antriebsleistung begrenzt ist, so dass auf eine Schmierung der in Eingriff stehenden Zahnräder des Zahnradgetriebes mit einem auf den Oberflächen der in Eingriff stehenden Zahnräder existenten Wasserfilm zurückgegriffen werden kann.

Aufgrund des Einsatzortes im Rahmen eines Wasserfahrzeugs steht Wasser in ausreichender Menge als Schmiermittel zur Verfügung und kann dem Zahnradgetriebe z.B. in permanentem Austausch, d.h. permanenter Zu- und Abströmung zugeführt werden. Die bislang bestehende Notwendigkeit einer sorgfältigen Abdichtung des Zahnradgetriebes gegenüber umgebendem Wasser, um eine Öl- und Fettverschmutzung zu vermeiden, erübrigt sich bei der erfindungsgemäßen Antriebsvorrichtung, so dass eine bedeutende bauliche Vereinfachung erzielt werden kann. Überdies ist die erfindungsgemäß vorgeschlagene Wasserschmierung wartungsfrei, da keinerlei Wechselintervalle für den Schmierstoff Wasser eingehalten werden müssen.

Nach einem Vorschlag der Erfindung wird zur Schmierung des Zahnradgetriebes Wasser verwendet, welches aus der Umgebung des Wasserfahrzeugs bezogen wird.

Beispielsweise kann zur Schmierung des Zahnradgetriebes Wasser verwendet werden, welches vom Wasserfahrzeug verdrängt worden ist. Hierzu können beispielsweise Einströmkanäle verwendet werden, die das vom Wasserfahrzeug verdrängte Wasser zum Zahnradgetriebe führen. Die Einströmkanäle müssen jedoch nicht notwendigerweise separat in die Bauteilgeometrie der erfindungsgemäßen Antriebsvorrichtung eingearbeitet werden, sondern es können auch ohnehin bei der erfindungsgemäßen Antriebsvorrichtung vorhandene Spalte und Öffnungen zwischen dem ersten und zweiten Teil der Antriebsvorrichtung genutzt werden, durch welche das vom Wasserfahrzeug beim Zuwasserlassen der Antriebsvorrichtung verdrängte Wasser in die Umgebung des Zahnradgetriebes eindringt.

Nach einem weiteren Vorschlag der Erfindung ist es auch möglich, das zur Schmierung verwendete Wasser mittels einer Pumpe zum Zahnradgetriebe zu fördern. Hierbei kann je nach Bauform der erfindungsgemäßen Antriebsvorrichtung eine separate Schmierwasserpumpe vorgesehen sein, die die zur Schmierung des Zahnradgetriebes benötigte Wassermenge fördert oder aber es wird ein Teil des bei Betrieb der erfindungsgemäßen Antriebsvorrichtung ohnehin beschleunigten Wasserstromes abgezweigt und dieser Teilstrom des Wassers gezielt als Schmiermittel dem Zahnradgetriebe zugeführt. Eine solche Ausführungsform kommt insbesondere bei den eingangs erwähnten Wasserstrahl- bzw. Jetantrieben zur Anwendung, da diese über einen mit hoher Geschwindigkeit im Innern des zweiten Teils, d.h. des Leitapparates strömenden Wasserstrom verfügen, von dem ein Schmiermittelstrom leicht abgezweigt werden kann.

Denkbar ist auch die Anordnung eines Staurohres an einer geeigneten Stelle des Wasserfahrzeuges, an der ein genügender Überdruck für die Zuführung des als Schmiermittel für das Zahnradgetriebe verwendeten Wassers vorherrscht.

Nach einem weiteren Vorschlag der Erfindung kann eine Filtereinrichtung zur Vorfilterung des zur Schmierung des Zahnradgetriebes verwendeten Wassers vorgesehen sein, um die Verschmutzung des Innenraums des mit dem Zahnradgetriebe ausgerüsteten Azimuthgetriebes zu vermeiden. Auch bei überdruckbedingter Zuführung des Wasserstromes zur Schmierung, beispielsweise durch eine Pumpe oder durch Abzweigung aus einem von der Antriebsvorrichtung beschleunigten Wasserstrom wird eine Vorfilterung bewirkt, die einer Verschmutzung des Zahnradgetriebes entgegenwirken.

Nach einem weiteren Vorschlag der Erfindung ist das Zahnradgetriebe in einem geschlossenen Steuergetrieberaum angeordnet, der nicht nur mit den bereits erwähnten Eintrittsöffnungen für die Zuführung des zur Schmierung des Zahnradgetriebes verwendeten Wassers ausgebildet ist, sondern darüber hinaus auch mindestens eine Austrittsöffnung aufweist, über die die Abführung des zur Schmierung des Zahnradgetriebes verwendeten Wassers erfolgt, so dass ein permanenter Austausch des als Schmiermittel eingesetzten Wassers im Steuergetrieberaum bewirkt wird.

Das Zahnradgetriebe kann aus miteinander in Eingriff stehenden Zahnrädern hergestellt sein, die zur Sicherstellung einer guten Wasserschmierbarkeit mit geeigneten Werkstoffpaarungen versehen sind. Beispielsweise kann eines der Zahnräder aus einem metallischen Werkstoff, wie Edelstahl, Bronze oder Messing oder auch einem keramischen Werkstoff gefertigt sein, während das zweite, mit dem vorgenannten Zahnrad in Eingriff stehende Zahnrad aus einem geeigneten Kunststoff, ggf. faserverstärkten Kunststoff oder ebenfalls Keramik hergestellt sein kann. In allen Fällen kommt sowohl die massive Ausführung der Zahnräder aus den genannten Werkstoffen in Betracht, wie auch eine lediglich oberflächlich im Bereich der miteinander in Eingriff stehenden Eingriffsoberflächen aufgebrachte Beschichtung.

Im Rahmen der Erfindung eignet sich die vorangehend erläuterte Antriebsvorrichtung insbesondere zur Verwendung an den eingangs erwähnten azimuthierenden Ruderpropellern oder azimuthierenden Wasserstrahl- bzw. Jetantrieben.

Weitere Ausgestaltungen und Einzelheiten der Erfindung werden nachfolgend anhand der ein Ausführungsbeispiel darstellenden Zeichnung näher erläutert.

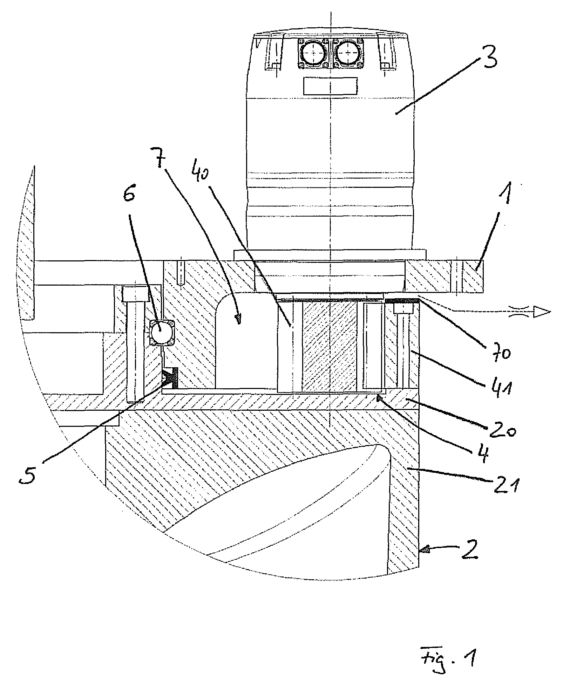

Die einzige Figur zeigt in einer ausschnittsweisen Darstellung den Azimuthantrieb einer Antriebsvorrichtung für ein Wasserfahrzeug, beispielsweise einen Wasserstrahlantrieb.

Die Antriebsvorrichtung umfasst einen nicht dargestellten Hauptantriebsmotor, der gemeinsam mit einem ersten Teil 1 der Antriebsvorrichtung verdrehfest mit dem Wasserfahrzeug verbunden ist, beispielsweise im Schiffsrumpf verschraubt ist. Ferner umfasst die Antriebsvorrichtung auch einen gegenüber dem ersten Teil 1 azimuthierend verschwenkbaren zweiten Teil 2, der im dargestellten Ausführungsbeispiel den Leitapparat 21 des Wasserstrahlantriebs sowie eine Tragvorrichtung 20 umfasst.

Der azimuthierend, beispielsweise endlos um 360° verschwenkbare zweite Teil 2 der Antriebsvorrichtung ist mittels Lagern 6 am verdrehfest angeordneten ersten Teil 1 der Antriebsvorrichtung gehaltert, so dass eine Drehung um eine in der Zeichenebene liegende, hier jedoch nicht dargestellte Drehachse mögliche ist, wobei zwischen dem ersten Teil 1 und dem zweiten Teil 2 ein Steuergetrieberaum 7 ausgebildet ist, der mittels Dichtungen 5 zwischen dem ersten und zweiten Teil 1, 2 abgedichtet ist.

In dem Steuergetrieberaum 7 ist ein Zahnradgetriebe 4 angeordnet, welches über zwei miteinander in Eingriff stehende Zahnräder 40, 41 verfügt.

Ein Steuerungsmotor 3 ist mit dem durch diesen angetriebenen Zahnrad 40 am verdrehfest angeordneten ersten Teil der Antriebsvorrichtung befestigt, während das zweite Zahnrad 41 mit dem verschwenkbaren zweiten Teil 2 der Antriebsvorrichtung verbunden ist. Es ist somit offensichtlich, dass bei Drehung des ersten Zahnrades 40 mittels des Steuermotors 3 der zweite Teil 2 der Antriebsvorrichtung um den ersten Teil 1 der Antriebsvorrichtung verschwenkt werden kann.

Über in der Zeichnung nicht näher dargestellte Eintrittsöffnungen, die beispielsweise von zwischen den Teilen 1, 2 vorhandenen Spalten gebildet sein können, dringt permanent Wasser in den Steuergetrieberaum 7 ein und bildet auf den miteinander in Eingriff stehenden Flanken der Zahnräder 40, 41 einen Wasserfilm aus, der zur Schmierung der Zahnräder 40, 41 verwendet wird. Über eine mit Bezugszeichen 70 gekennzeichnete Austrittsöffnung wird das zur Schmierung verwendete Wasser, welches demgemäß aus der Umgebung des Wasserfahrzeugs stammt und von diesem verdrängt worden ist, permanent abgeführt, so dass ein stetiges Nachströmen des als Schmiermittel verwendeten Wassers in den Steuergetrieberaum 7 gewährleistet ist. Die Dichtungen 5 verhindern einen Eintritt dieses zugeführten und zur Schmierung verwendeten Wassers in den Rumpf des Wasserfahrzeugs.

Auf diese Weise kann die vorangehend geschilderte Antriebsvorrichtung ohne öl- oder fettbasierte Schmierstoffe auskommen, vielmehr wird die Schmierung der in Eingriff stehenden Zahnräder 40, 41 ausschließlich über das in den Steuergetrieberaum 7 eintretende und aus diesem über die Austrittsöffnung 70 austretenden Wasser gewährleistet.

## Patentansprüche

1. Antriebsvorrichtung für ein Wasserfahrzeug, die in einen mit dem Wasserfahrzeug verdrehfest verbindbaren ersten Teil (1) und einen mittels eines Steuermotors (3) mit nachgeordnetem Zahnradgetriebe (4) demgegenüber azimuthierend verschwenkbaren zweiten Teil (2) unterteilt ist, **dadurch gekennzeichnet, dass** zur Schmierung des Zahnradgetriebes (4) Wasser verwendet ist.

2. Antriebsvorrichtung nach Anspruch 1, **dadurch gekennzeichnet, dass** das zur Schmierung verwendete Wasser mittels einer Pumpe zum Zahnradgetriebe (4) förderbar ist.

3. Antriebsvorrichtung nach einem der Ansprüche 1 oder 2, **dadurch gekennzeichnet, dass** eine Filtereinrichtung zur Vorfilterung des zur Schmierung des Zahnradgetriebes (4) verwendeten Wassers vorgesehen ist.

4. Antriebsvorrichtung nach einem der Ansprüche 1 bis 3, **dadurch gekennzeichnet, dass** das Zahnradgetriebe (4) in einem geschlossenen Steuergetrieberaum (7) angeordnet ist, der mit Eintritts- und Austrittsöffnungen (70) für die Zu- und Abführung des zur Schmierung des Zahnradgetriebes (4) verwendeten Wassers ausgebildet ist.

5. Antriebsvorrichtung nach einem der Ansprüche 1 bis 4, **dadurch gekennzeichnet, dass** das Zahnradgetriebe (4) miteinander in Eingriff stehende Zahnräder (40, 41) aufweist, von denen ein Zahnrad (40) zumindest im Bereich seiner Eingriffsoberflächen aus einem metallischen oder keramischen Werkstoff und das andere Zahnrad (41) zumindest im Bereich seiner Eingriffsoberflächen aus einem Kunststoff oder keramischen Werkstoff gebildet ist.

6. Antriebsvorrichtung nach einem der Ansprüche 1 bis 5, **gekennzeichnet durch** Ausbildung als azimuthierender Ruderpropeller oder azimuthierender Wasserstrahlantrieb.

7. Wasserfahrzeug mit einer Antriebsvorrichtung nach einem der Ansprüche 1 bis 6, **dadurch gekennzeichnet, dass** das zur Schmierung des Zahnradgetriebes (4) verwendete Wasser aus der Umgebung des Wasserfahrzeuges beziehbar ist oder vom Wasserfahrzeug verdrängtes Wasser verwendbar ist, welches über Einströmkanäle zum Zahnradgetriebe (4) führbar ist.

## Claims

1. Drive system for a watercraft which is divided into a first part (1) which can be connected to the watercraft in a torsion-proof manner and a second part (2) which can be pivotable in an azimuthing manner in relation thereto by means of a control motor (3) with a subordinated gear drive (4), **characterised in that** water is used to lubricate the gear drive (4).

2. Drive system according to claim 1, **characterised in that** the water used for lubrication can be conveyed by a pump to the gear drive (4).

3. Drive system according to any one of claims 1 or 2 **characterised in that** a filter device is provided for pre-filtering the water used for lubricating the gear drive (4).

4. Drive system according to any one of claims 1 to 3 **characterised in that** the gear drive (4) is arranged in an enclosed control gear chamber (7) which has inlet and outlet openings (70) for supplying and removing the water used for lubricating the gear drive (4).

5. Drive system according to any one of claims 1 to 4 **characterised in that** the gear drive (4) has gear wheels (40, 41) engaging in each other, of which one gear wheel (40) at least in the area of its engagement surfaces is made of a metal or ceramic material and the other gear wheel (41) at least in the area of its engagement surfaces is made of a plastic or ceramic material.

6. Drive system according to any one of claims 1 to 5 **characterised by** being configured as an azimuthing rudder propeller or azimuthing water jet drive.

7. Watercraft with a drive system according to any one of claims 1 to 6 **characterised in that** the water used for the lubrication of the gear drive (4) can be obtained from the surroundings of the watercraft or water which displaced by the watercraft and can be supplied to the gear drive (4) via inflow channels can be used.

## Revendications

1. Dispositif de propulsion pour un navire, lequel dispositif est divisé en une première partie (1) pouvant être reliée au navire de manière à résister à la torsion et en une deuxième partie (2) pouvant pivoter au moyen d'un moteur de commande (3), avec transmission par engrenages (4) agencée en aval, de manière azimutale par rapport à celui-ci, **caractérisé en ce que** de l'eau est utilisée pour lubrifier la transmission par engrenages (4).

2. Dispositif de propulsion selon la revendication 1, **caractérisé en ce que** l'eau utilisée pour la lubrification peut être transportée jusqu'à la transmission par engrenages (4) au moyen d'une pompe.

3. Dispositif de propulsion selon l'une des revendications 1 ou 2, **caractérisé en ce qu'**un dispositif filtrant est prévu pour préfiltrer l'eau utilisée pour lubrifier la transmission par engrenages (4).

4. Dispositif de propulsion selon l'une des revendications 1 à 3, **caractérisé en ce que** la transmission par engrenages (4) est agencée dans un espace de mécanisme de distribution (7) fermé qui est conçu avec des ouvertures d'entrée et de sortie (70) pour l'admission et l'évacuation de l'eau utilisée pour la lubrification de la transmission par engrenages (4).

5. Dispositif de propulsion selon l'une des revendications 1 à 4, **caractérisé en ce que** la transmission par engrenages (4) comporte des roues dentées (40, 41) qui sont en prise les unes avec les autres et parmi lesquelles une roue dentée (40) est formée en une matière métallique ou céramique au moins dans la zone de ses surfaces d'engrènement et l'autre roue dentée (41) est formée en une matière plastique ou céramique au moins dans la zone de ses surfaces d'engrènement.

6. Dispositif de propulsion selon l'une des revendications 1 à 5, **caractérisé par** une conception comme hélice de gouvernail actif azimutale ou comme propulsion par jet hydraulique azimutale.

7. Navire avec un dispositif de propulsion selon l'une des revendications 1 à 6, **caractérisé en ce que** l'eau utilisée pour la lubrification de la transmission par engrenages (4) peut être tirée de l'environnement du navire ou **en ce que** l'on peut utiliser de l'eau qui est déplacée par le navire et qui peut être conduite par l'intermédiaire de canaux d'admission jusqu'à la transmission par engrenages (4).
